# EUROPEAN PATENT APPLICATION

(11) **EP 4 782 286 A1**
(43) Date of publication of application: **29.07.2026**
(21) Application number: 25153264.4
(22) Date of filing: 22.01.2025
(51) Int. Cl.: B60W 10/04, B60W 10/18, B60W 10/20, B60W 50/00, B60W 50/10

(54) **A METHOD FOR GENERATING AT LEAST ONE CONTROL SIGNAL FOR AT LEAST ONE FUNCTIONAL DEVICE OF AN AT LEAST IN PART AUTOMATICALLY OPERATED MOTOR VEHICLE, A COMPUTER PROGRAM PRODUCT, A COMPUTER-READABLE STORAGE MEDIUM, AS WELL AS AN ASSISTANCE SYSTEM**

(71) Applicant: Valeo Comfort and Driving Assistance, 94000 Créteil (FR)
(72) Inventor: Bunouf, Elise, 94000 Creteil (FR); Yovo, Melvin, 94000 Creteil (FR); Garnault, Alexandre, 94000 Creteil (FR); Nguyen, Kevin, 94000 Creteil (FR)
(74) Representative: Jauregui Urbahn, Kristian

(57) **Abstract**

The invention relates to a method for generating at least one control signal (3) for at least one functional device (4) of an at least in part automatically operated motor vehicle (1) by an assistance system (2) of the motor vehicle (1), comprising capturing surroundings (8) of the motor vehicle (1) by at least one first capturing device (5) of the assistance system (2); determining a current gaze (9) of a driver of the motor vehicle (1) by a second capturing device (6) of the assistance system (2); assigning the determined current gaze (9) to a current object (10) in the captured surroundings (8) by an electronic computing device (7) of the assistance system (2); analyzing the object (10) by the electronic computing device (7); providing a personalized action plan for an at least in part automated maneuver of the motor vehicle (1) depending on a user profile and the analyzed object (10); and generating the at least one control signal (3) for the at least one functional device (4) depending on the analyzed object (10) and the personalized action plan by the electronic computing device (7). Furthermore, the present invention relates to a computer program product, a computer-readable storage medium, as well as to an assistance system (2).

## Description

The present invention relates to a method for generating at least one control signal for at least one functional device of an at least in part automatically operated motor vehicle by an assistance system of the motor vehicle according to the pending claim 1. Furthermore, the present invention relates to a corresponding computer program product, a corresponding computer-readable storage medium, as well as to a corresponding assistance system.

Automatic driver assistance systems (ADAS) are advanced technologies used in motor vehicles to improve safety and driving comfort. These assistance systems use a range of sensors, cameras, and other technologies to collect information about the motor vehicle and its surroundings and make decisions on how the motor vehicle should respond. An important component of many ADAS is the driver's field of view (FOV) which captures the area where the driver is looking or can see. By detecting the field of view of the driver, the ADAS may make decisions such as issuing warnings or taking action to help the driver observe important objects and conditions in the surroundings.

A wide and precise field of view for the driver is important for the performance and reliability of ADAS as it ensures that the driver captures all relevant objects and conditions in their environment. An insufficient field of view can result in important information not being considered, leading to incorrect or delayed decisions. To provide a wide and accurate field of view, ADAS typically use interior cameras that track the driver's head and eye movements, as well as sensors and maps that capture the motor vehicle and its surroundings. This information is then combined to create an accurate picture of the driver's field of view.

By taking into account the driver's field of view, ADAS may help prevent accidents and improve the overall driving experience. By assisting the driver in observing important objects and conditions in their environment, ADAS can help make driving safer and less strenuous.

Therefore, it is an object of the present invention to provide a method, a corresponding computer program product, a corresponding computer-readable storage medium, as well as a corresponding assistance system, by which a driver of the motor vehicle can be assisted in an improved manner.

This object is solved by a method, a corresponding computer program product, a corresponding computer-readable storage medium, as well as a corresponding assistance system according to the independent claims. Advantageous embodiments are presented in the dependent claims.

One aspect of the invention relates to a method for generating at least one control signal for at least one functional device of an at least in part automatically operated motor vehicle by an assistance system of the motor vehicle. Surroundings of the motor vehicle are captured by a first capturing device of the assistance system. A current gaze of a driver of the motor vehicle is determined by a second capturing device of the assistance system. The determined current gaze is assigned to a current object in the captured surroundings by an electronic computing device of the assistance system. The object is analyzed by the electronic computing device. A personalized action plan for an at least in part automated maneuver of the motor vehicle is provided depending on a user profile and the analyzed object and the at least one control signal for the at least one functional device is generated depending on the analyzed object and the personalized action plan by the electronic computing device.

Therefore, depending on the analyzed object and depending on the assigned gaze, the control signal can be adapted such that, for example, an improved evasive maneuver of the motor vehicle for preventing an accident can be initiated.

In particular, recurrent situations observed by the driver on similar objects may require a safety action which can be dangerous under stress, especially if the driver has to take his eyes off the road to activate the safety function of the assistance system. Therefore, the solution is a personalized action depending on the type of object observed. Furthermore, further various factors can be taken into consideration in order to generate the control signal.

Providing a personalized action plan for an at least partially automated maneuver of a motor vehicle based on a user profile and the analysis of an object assigned to a user's gaze can offer several advantages. Personalization enhances user experience by tailoring the system's behavior to the driver's preferences, driving style, and habits, making the interaction more intuitive and enjoyable. By analyzing the object of a driver's gaze, the automated maneuver can prioritize actions that align with the driver's intentions, potentially reducing reaction times, and minimizing the risk of accidents. This is particularly valuable during transitions between manual and automated driving modes or in semi-autonomous vehicles where the driver remains responsible for certain tasks. A personalized action plan can enable customization of vehicle control based on user preferences and abilities, such as adjusting acceleration/deceleration patterns, steering sensitivity, or following distances. By anticipating the driver's intentions and automating appropriate maneuvers, fuel consumption and travel time can be optimized, resulting in a more efficient driving experience. A personalized action plan system can learn from user behavior over time, refining its algorithms to better match the driver's preferences and driving patterns, leading to an increasingly seamless and tailored driving experience. Customized action plans can cater to a wider range of drivers with different abilities or needs, ensuring that automated vehicles are accessible and usable by everyone. By automating maneuvers based on the driver's gaze and intentions, fatigue can be reduced, leading to safer and more comfortable driving experiences over long distances or during heavy traffic conditions.

A user profile for the personalized action plan in the motor vehicle can be generated through various methods. Starting by gathering basic information about the driver, such as age, gender, driving experience, preferred vehicle type, and common driving scenarios (e.g., urban, highway, or rural environments). This information can be collected through an initial setup questionnaire or during the user onboarding process. Analyzing the driver's real-time driving behavior by monitoring factors such as acceleration patterns, braking habits, steering sensitivity, and following distances can be used. These data points can be compared to typical driving styles of different demographic groups to refine the user profile further. Integrating gaze tracking technology to monitor where the driver is looking while operating the vehicle can further used for the user profile. This information can help in understanding the driver's intentions and preferences for various maneuvers, such as changing lanes, overtaking, or navigating intersections. Regularly solicit user feedback on the system's performance and suggestions for improvement can be used. This can be done through in-vehicle surveys, rating systems, or direct communication channels. Incorporating user feedback into the user profile will help refine the personalized action plan over time. Leverage external data sources to augment the user profile, such as integrating with calendar applications to predict regular destinations, weather services for route planning and adjusting driving style based on road conditions, or social media to identify frequently visited locations may also be used for generating the user profile. Regularly updating the user profile based on new data points, changes in driver behavior, and feedback may be performed. This will ensure that the personalized action plan remains relevant and up-to-date with the driver's evolving preferences and needs.

The control signal may then be transmitted to a functional device of the motor vehicle, for example a braking device, an acceleration device, a steering device or furthermore. Therefore, a personalized action plan is linked to the driver's gaze and the type of object the driver is staring at. Depending on the vehicle exterior and/or interior context, the personalized action plan is configured to propose the activation or optimization, for example a margin setting of safety feature. The assistance system may use various sensors to capture the surroundings and provide information to the advanced driver assistance system (ADAS) and other safety features.

For example, cameras are widely used in motor vehicles to capture images and videos of the vehicle's surroundings. They can be used for functions such as lane departure warning, line and lane detection, pedestrian detection, and traffic sign recognition. Radar sensors use radio waves to detect objects and measure their distance, speed and angle. They are often used for adaptive cruise control, collision avoidance and parking assistance. Ultrasonic sensors emit high-frequency sound waves to detect nearby objects and measure their distance. They are commonly used for parking assistance, blind spot detection, and reversing cameras. Lidar (light detection and ranging) sensors use laser light to create a three-dimensional map of the vehicle's surroundings. They can be used for functions such as autonomous driving, pedestrian detection, and object recognition. Infrared sensors detect heat signatures of objects in the vehicle's environment. They are commonly used for night vision systems, which help drivers see better in low-light conditions. GPS sensors provide location information and can be used for functions such as navigation, traffic information and stolen vehicle recovery. By using a combination of these sensors, the motor vehicle can gather a comprehensive view of its surroundings, enabling safety features to help prevent accidents and improve the overall driving experience.

The gaze detection is a technology used in motor vehicle to detect where the driver is looking and determine if they are paying attention, for example to the road or according to this invention to a specific object in the surroundings. This technology uses cameras or other sensors, for example, in a dashboard, a rear view mirror or in sun visors to track the driver's eye movements and head positions. The gaze detection system analyzes the images captured by the camera or sensor to identify the driver's pupils and determine their line of sight. It can then calculate the angle between the driver's gaze direction and the road ahead, known as the so-called "gaze angle", and use this information to determine if the driver is looking at the road or somewhere else such as their phone or dashboard, or the objects in the surroundings.

Gaze detection technology can be used for various purposes in motor vehicles. For example, it can be used to alert drivers when they are not paying attention to the road, which can help prevent accidents caused by distracted driving. It can also be used to adjust the vehicle's systems based on the driver's gaze such as automatically activating windshield wipers when the driver is looking at a wet road or dimming the dashboard lights when the driver is looking directly at them. However, there are some challenges associated with implementing gaze detection technology into motor vehicles, such as ensuring accuracy in different lighting conditions and accounting for variations in driver head position and eye shape. Additionally, privacy concerns have been raised about using cameras to monitor the driver's behavior which may need to be addressed through appropriate regulations and policies. Overall, gaze detection technology has the potential to improve safety and convenience in motor vehicles by providing real time information about the driver's attention and adjusting the vehicle's system accordingly. However, it is essential to address its challenges and ensure that it is used responsibly and effectively.

According to an embodiment, additionally depending on a current dynamic parameter of the motor vehicle the at least one control signal is generated. Therefore, also the current dynamic parameter, for example a speed of the motor vehicle and/or a steering of the motor vehicle and/or a position can be taken into consideration, in order to generate the control signal. This has the advantage, that depending on the current situation, the at least one control signal can be generated in a specific manner, and therefore, a more optimized maneuver can be initiated.

In another embodiment, as the current dynamic parameter, a current speed of the motor vehicle and/or a current driving mode of the motor vehicle and/or a current position of the motor vehicle can be taken into consideration. Therefore, the current speed of the motor vehicle and/or the current drive mode, for example an eco-driving mode, or a sport driving mode, as well as the current position, in particular relative to the object and relative in the surroundings, can be taken into consideration. For example, it can be taken into consideration that the motor vehicle is currently driving in a city traffic scene. Therefore, different driving maneuver can be initiated by the assistance system. Therefore, depending on the current situation of the motor vehicle, an optimized maneuver can be initiated by the motor vehicle.

In another embodiment, additionally depending on a current weather condition of the surroundings the at least one control signal is generated. For example, when it is raining, braking cannot be as hard, as when the sun is shining. Therefore, the weather condition can also be used in order to generate an optimized control signal for the at least one functional device or a plurality of functional devices.

In another embodiment, additionally depending on a current traffic condition of the motor vehicle the at least one control signal is generated. For example, if further motor vehicles or bicycle drivers are in the surroundings, different maneuvers can be selected from a plurality of provided maneuvers. For example, if another motor vehicle is ahead of the motor vehicle, a different maneuver may be initiated instead of when no motor vehicle is in front of the motor vehicle. Therefore, an optimized maneuver can be generated by the assistance system.

According to another embodiment, additionally depending on a current state of the driver the at least one control signal is generated. For example, a stress level of the driver can be determined. Therefore, depending on the current stress level, a maneuver can be initiated.

In another embodiment, the current state of the driver is determined depending on the user profile of the driver provided by the electronic computing device. For example, the user profile can be generated in the past and therefore is specialized/personalized for the user. For example, the electronic computing device may comprise an artificial intelligence, which generates a specific model for the driver. Depending on the user profile, the current state can be determined in an improved manner.

In another embodiment, the driver is identified by the assistance system, and the current state is determined depending on the identification. For example, a camera inside of the motor vehicle can be used in order to identify the driver. Therefore, the specific driver profile can be selected, and therefore the current state can be determined in an improved manner.

According to another embodiment, the control signal is generated for a driving dynamical functional device of the motor vehicle. Dynamical functional devices in a motor vehicle are, for example, components that move or change position in response to inputs or conditions, such as steering, braking, acceleration, or road surface variations. The steering system is one of the most critical dynamic devices in the motor vehicle, allowing drivers to control the direction of the motor vehicle. Furthermore, the suspension system may be designed to absorb shocks and vibrations caused by road surface irregularities and provide a comfortable ride for occupants. The braking system is another critical dynamic device in a motor vehicle, allowing drivers to slow down or stop the motor vehicle. Furthermore, the transmission system is responsible for transmitting power from the engine to the wheels, allowing the vehicle to move forward and backward. The differential dynamic device that allows power to be distributed between two wheels by allowing them to rotate at different speeds, such as when turning corners. The power steering system is an assistive device that reduces the effort required to turn the steering wheel, making it easier for drivers to control the vehicle's direction. Dynamic devices in motor vehicles play a crucial role in assuring safety, comfort, and performance. They require regular maintenance and inspection to ensure they are functioning correctly and not causing any issues that could compromise the vehicle's operation or occupants' safety.

According to another embodiment, at least one safety parameter of an assistance function as the functional device is adapted by using at least one control signal. For example, as the assistance function a drive-by function may be provided. For example, with the drive-by function a safety distance to the object may be automatically adapted. Therefore, when the driver may look at the specific object, the safety distance to this object, for example a bicycle, may be increased or decreased. Therefore, a safe and improved driving of the motor vehicle may be realized.

In another embodiment, during analyzation of the object at least a type class of the object and/or a distance to the object is determined. For example, the type class may provide another motor vehicle, or a pedestrian or a bicycle driver or static objects or cross roads or intersections or furthermore. Therefore, depending on the analyzed object, the control signal may be generated.

In another embodiment, a period of time the driver is gazing to the object is taken into consideration for generating the control signal. For example, a threshold is provided, wherein when the driver is gazing to the object a longer time than the threshold, this object may be used in order to generate the control signal. If the time period is lower than the threshold, no control signal may be generated depending on the determined gaze. Therefore, depending on the time period, the object may be classified as important, and therefore control signals assigned to this object may be generated.

According to another embodiment, starting the method is triggered by receiving a start signal from the driver. For example, the start signal may be triggered by using a button at the steering wheel or at a middle console of the motor vehicle. Otherwise, if, for example, the driver is staring at the object for the predefined time period, the method starts automatically. Therefore, different triggers may be used in order to initiate the method.

In particular, the method is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to an assistance system for generating at least one control signal for at least one functional device of an at least in part automatically operated motor vehicle, comprising at least one first capturing device, one second capturing device and one electronic computing device, wherein the assistance system is configured for performing a method according to the preceding aspect. In particular, the method is performed by the assistance system.

Furthermore, the present invention relates to a motor vehicle comprising at least the assistance system according to the preceding aspect. In particular, the motor vehicle is at least in part automatically operated.

Advantageous embodiments of the method are to be regarded as advantageous embodiments of the computer program product, the computer-readable storage medium, as well as the support system. Therefore, the support system comprises means for performing the method.

In the present disclosure, a computing unit/electronic computing device can for example be understood as a data processing device with processing circuits. Thus, a computing unit can perform computing operations to process data. The computing operations can also include indexed accesses to a data structure, for example a look-up table, LUT.

Within the scope of the present disclosure, an object recognition algorithm can be understood as a computer algorithm, which is capable of identifying and localizing one or more objects within a provided input dataset, for example input image, for example in that it determines corresponding bounding boxes or regions of interest (ROI) and in particular associates a corresponding object class with each of the bounding boxes, wherein the object classes can be selected from a predefined set of object classes. Therein, the assignment of an object class to a bounding box can be understood such that a corresponding confidence value or a probability that the object identified within the bounding box belongs to the corresponding object class, is provided. For example, the algorithm can provide such a confidence value or a probability for each of the object classes for a given bounding box. The assignment of the object class can for example include the selection or provision of the object class with the greatest confidence value or the greatest probability. Alternatively, the algorithm can also only determine the bounding boxes without associating a corresponding object class. Furthermore, by the algorithm detected object classes could be represented as dynamic objects in the generated display image as complement to the three dimensional map.

In particular, a computing unit can include one or more computers, one or more microcontrollers and/or one or more integrated circuits, for example one or more application-specific integrated circuits, ASIC, one or more field-programmable gate arrays, FPGA, and/or one or more systems on a chip, SoC. The computing unit can also include one or more processors, for example one or more microprocessors, one or more central processing units, CPU, one or more graphics processing units, GPU, and/or one or more signal processors, in particular one or more digital signal processors, DSP. The computing unit can also include a physical or virtual cluster of computers or others of the mentioned units.

A computing unit can also include one or more hardware and/or software interfaces and/or one or more storage units. Therein, a storage unit can be designed as a volatile data memory, for example as a dynamic random access memory, DRAM, or static random access memory, SRAM, or as a non-volatile data memory, for example as a read-only memory, ROM, as a programmable read-only memory, PROM, as an erasable programmable read-only memory, EPROM, as an electrically erasable programmable read-only memory, EEPROM, as a flash memory or flash EEPROM, as a ferroelectric random access memory, FRAM, as a magnetoresistive random access memory, MRAM, or as a phase-change random access memory, PCRAM.

Advanced Driver-Assistance Systems (ADAS) according to this invention are sophisticated electronic systems designed to enhance vehicle safety and driver convenience. These systems consist of various technical components, including sensors, cameras, radar, lidar, actuators, and control units. Sensors play a crucial role in detecting the environment around the vehicle. They include ultrasonic sensors, cameras, radar, and lidar. Ultrasonic sensors use sound waves to measure distances to nearby objects, while cameras capture images of the road and surrounding area and detect and classify objects. Radar and lidar use radio or light waves, respectively, to detect objects at longer ranges and with higher precision. ADAS control units/electronic computing devices process sensor data and make decisions based on that information. They typically consist of a microcontroller, memory, input/output interfaces, and communication protocols. The control unit receives data from the sensors, processes it using algorithms and machine learning techniques, and then sends commands to the actuators to take appropriate actions. Actuators are devices that convert electrical signals into physical movements or actions. They include electric motors, solenoids, and hydraulic or pneumatic systems. For example, an electric motor can adjust the steering angle, while a solenoid can control the brakes or throttle position. A user interface provides feedback to the driver about the status of the ADAS. It includes visual displays, audible alerts, and haptic feedback. Visual displays show information on dashboard screens, while audible alerts use sounds or voice messages to warn the driver of potential hazards. Haptic feedback can include steering wheel vibrations or seat pulses to alert the driver of danger. ADAS rely on communication protocols to transmit data between components. Common protocols include CAN (Controller Area Network), LIN (Local Interconnect Network), and Ethernet. These protocols allow different components to communicate with each other, ensuring that the ADAS functions as intended. Modern ADAS use machine learning algorithms to improve their performance over time. These algorithms analyze sensor data and learn from it, allowing the system to adapt to changing conditions and improve its accuracy. In summary, an ADAS consists of various technical components, including sensors, control units, actuators, user interfaces, communication protocols, and machine learning algorithms. By combining these elements, ADAS can help improve vehicle safety, reduce accidents, and enhance the driving experience.

For application cases or application situations, which can arise in a method according to the invention and which are not explicitly described herein, it can be provided that an error message and/or a request for inputting a user feedback are output and/or a default setting and/or a predetermined initial state are adjusted according to the method.

Further features of the invention are apparent from the claims, the figures and the description of figures. The features and feature combinations mentioned above in the description as well as the features and feature combinations mentioned below in the description of figures and/or shown in the figures can be encompassed by the invention not only in the respectively specified combination, but also in other combinations. In particular, implementations and feature combinations can also be encompassed by the invention, which do not comprise all of the features of an originally formulated claim. Moreover, implementations and feature combinations can be encompassed by the invention, which extend beyond or deviate from the feature combinations set forth in the relations of the claims.

Therefore, the figures show in:
- Fig. 1: a schematic side view according to an embodiment of a motor vehicle comprising an embodiment of an assistance system;
- Fig. 2: another schematic block diagram according to an embodiment of a motor vehicle comprising an embodiment of an assistance system; and
- Fig. 3: a schematic flow chart according to an embodiment of the method.

In the figures, the same elements are comprising the same reference signs.

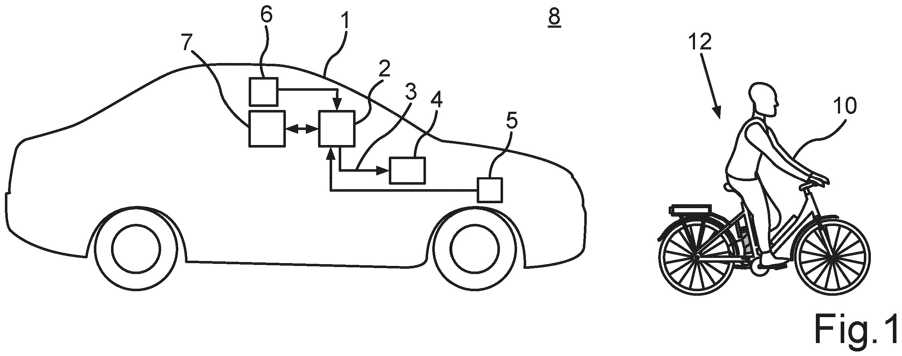

Fig. 1 shows a schematic side view according to an embodiment of a motor vehicle 1. The motor vehicle 1 is configured as an at least in part automatically operated motor vehicle 1. Therefore, the motor vehicle 1 may comprise at least one assistance system 2. The assistance system 2 is configured for generating at least one control signal 3 for at least one functional device 4 of the at least in part automatically operated motor vehicle 1. Therefore, the assistance system 2 may comprise at least one first capturing device 5, one second capturing device 6 and one electronic computing device 7. For example, but not limited to, the at least one functional device 4 can be a dynamical driving device and/or a driving dynamical functional device.

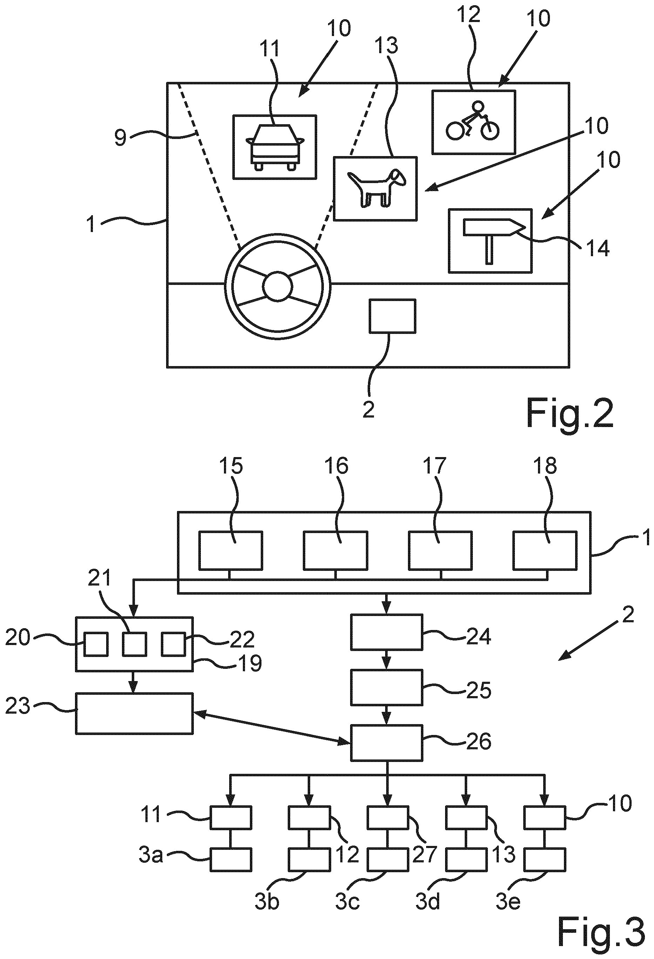

According to an embodiment, capturing surroundings 8 of the motor vehicle 1 by the first capturing device 5 is performed. A current gaze 9 (Fig. 2) of a driver of the motor vehicle 1 is determined by the second capturing device 6. The determined current gaze 9 is assigned to a current object 10 in the captured surroundings 8 by the electronic computing device 7. The object 10 is analyzed. A personalized action plan for an at least in part automated maneuver of the motor vehicle 1 is provided depending on a user profile and the analyzed object 10, and the at least one control signal 3 is generated depending on the analyzed object 10 and the personalized action plan by the electronic computing device 7.

In particular, depending on a current dynamic parameter of the motor vehicle 1, the at least one control signal 3 is generated. Therefore, as the current dynamic parameter, a current speed of the motor vehicle 1 and/or a current driving mode of the motor vehicle 1 and/or a current position of the motor vehicle 1 can be taken into consideration. Additionally, depending on a current weather condition of the surroundings 8 the at least one control signal 3 is generated. Furthermore, depending on a current traffic condition of the motor vehicle 1 the at least one control signal 3 is generated. Furthermore, additionally depending on a current state of the driver the at least one control signal 3 is generated. The current state of the driver is determined depending on the user profile of the driver provided by the electronic computing device 7. Therefore, the driver may be identified by the assistance system 2, and the current state is determined depending on the identification.

In particular, it is shown that the control signal 3 may be generated for the driving dynamical functional device 4 of the motor vehicle 1. Furthermore, at least one safety parameter of an assistance function as the functional device 4 may be adapted by using at least one control signal 3.

Furthermore, during analyzation of the object 10 at least a type class of the object 10 and/or a distance to the object 10 is determined. Furthermore, a period of time the driver is gazing to the object 10 is taken into consideration for generating the control signal 3. Furthermore, for example, but not limited to, starting the method may be triggered by receiving a start signal from the driver (eg: SAE Level 2). Moreover, for example, but not limited to, whenever the motor vehicle will be in capacity to trigger itself, it will (eg: SAE Level 3 and/or SAE Level 4 and/or SAE Level 5).

In particular, recurrent situations observed by the driver on similar objects 10 may require a safety action which can be dangerous under stress, especially if the driver has to take his eyes off the road to activate the safety function of the assistance system 2. The solution is a personalized action depending on the type of object 10 observed. The actions may depend on the class, the location, the distance, the speed, the driver state and the event. Choices can be made by looking at them or by using a trigger in the cabin, such as buttons on a steering wheel and/or on a touchscreen.

Therefore, interior sensors, exterior sensors, gaze tracking software, classification of external objects, gaze interactions with external objects software, as well as activation or adjustment of the assistance system 2, which may be in particular a so called ADAS (Advanced Driver-Assistance Systems) is provided.

The general context is determined based on diverse data in order to determine the driver's intention. In particular, the vehicle state, the SAE-level, the ADAS activated, location, compass and geo reference may be used.

SAE Level, also known as Society of Automotive Engineers (SAE) International J3016 standard, is a classification system for automated driving systems based on their level of automation. The system defines six levels of automation, ranging from Level 0 (no automation) to Level 5 (full automation): - Level 0 - No Automation: The driver is in control of all aspects of driving, but the vehicle may provide warnings or alerts to assist the driver; - Level 1 - Driver Assistance: The vehicle can perform one or more specific functions, such as acceleration or steering, but the driver must remain engaged and monitor the system at all times; - Level 2 - Partial Automation: The vehicle can control both acceleration and steering under certain conditions, but the driver must remain engaged and be prepared to take over control at any time; - Level 3 - Conditional Automation: The vehicle can perform all aspects of driving under certain conditions, but the driver must be available to intervene when prompted by the system; - Level 4 - High Automation: The vehicle can perform all aspects of driving under a wider range of conditions, but the driver may have the option to take over control if desired; and - Level 5 - Full Automation: The vehicle can perform all aspects of driving in all conditions and does not require any human intervention.

SAE Levels are widely used in the automotive industry to describe the level of automation in a particular vehicle or system. By providing a clear and consistent framework for automated driving systems, SAE Levels help ensure that vehicles are designed and tested to meet specific safety standards and performance requirements.

Furthermore, the user profile, in particular gender or age, the state, for example, fatigue, distraction, stress, emotions or furthermore may be used in order to determine the driver's intention. Furthermore, the body posture of the driver may be used.

Furthermore, the environment, in particular the surroundings 8, are used for generating the control signal 3. Therefore, a map, type of road, a planned maneuver, weather conditions, traffic level and infrastructure may be used in order to generate the control signal 3.

Fig. 2 shows another schematic block diagram according to an embodiment of the motor vehicle 1. In particular, a view through the windshield of the motor vehicle 1 is shown. Depending on the gaze 9, different objects 10 may be identified. For example, a further motor vehicle 11, a cyclist 12, an animal 13 as well as road signs 14 may be determined and the gaze 9 may be assigned to one of these objects 10.

Therefore, the driver's gaze 9 can be linked to the type of object 10 the driver is looking at in order to start a specific action depending on the external and internal context. In particular, to propose the activation or optimization, for example a margin setting, of a functional device 4 of the assistance system 2.

A first example may be that the driver looks to the cyclist 12 for more than a determined time (threshold), and therefore the safety distance from the edge of the road increases.

Another example may be that the driver is at a traffic light and looks insistently in a specific direction. This enables the assistance system 2 to determine the driver's attention to go in that direction and suggests using the blinkers to move in the desired direction. The assistance system 2 is enriched by the context, taking into account navigation information and the driver's gaze 9.

Another example may be that the driver intentionally looks at an object 10 on the road for a set period of time to initiate a request to activate a function. If the driver intentionally looks at the further motor vehicle 11 in front of him for a set of time, the assistance system 2 may ask the driver whether he wants to activate the automated cruise control based on the speed of the further vehicle 11.

Another example may be that the driver looks at an object 10 on the road for a set period of time or several times, and the assistance system 2 suggests that a function may be activated taking into account the context. If the driver looks insistently at a lorry in front of him for a while or several times, the assistance system 2 may suggest that he put on the indicators and overtake it, because it knows that the lane is clear ahead, for example, and behind with the blind spot, and the maneuver can be carried out safely in a relatively satisfactory time frame. If the motor vehicle 1 has the necessary driving aids, it offers automatic overtaking, for example, the automatic lane change.

Another example may be that the assistance system 2 may know which object 10 the driver is looking at the rear using the side mirrors and depending on the context suggests an action to the driver. If the driver is in the city and driving at low speed close to further motor vehicles 11 on other lanes and there is not enough space between them to allow a motorcycle to pass. The motor vehicle 1, when a motorcycle arrives, may offer to turn on the blinkers and shift with the side automatic cruise control to signal that it is moving out of the way to leave more space if the driver has seen this.

Fig. 3 shows a schematic flow chart according to an embodiment of the method. Fig. 3 shows that, for example, with interior sensor 15, exterior sensors 16, navigation sensors 17, for example, GPS, and with a navigation system 18, the assistance system 2 may analyze the surroundings 8 as well as the interior of the motor vehicle 1. This information may be used in order to generate a general context 19. The general context 19 may comprise at least vehicle data 20, the driver state 21 as well as the environment 22. Depending on the general context 19, the assistance system 2 may estimate the driver's intentions 23.

In a block 24, the assistance system 2 may detect the driver is looking at the object 10 for a predetermined time threshold. In the block 25, the assistance system 2 matches the object 10 observed with a classification. In a block 26, the assistance 2 system combines the information to determine the adapted action to launch through a decision matrix.

Just, for example only, five different decisions are provided. For example, if the object 10 is classified as a another motor vehicle 11, a first control signal 3a may be generated. If the object 10 is classified as a cyclist 12, a second control signal 3b may be generated. If the object 10 is classified as a pedestrian 27, a third control signal 3c is generated. If the object 10 is classified as an animal 13, a fourth control signal is 3d is generated. If the object 10 is classified as another object, another control signal 3e may be generated.

## Claims

1. A method for generating at least one control signal (3) for at least one functional device (4) of an at least in part automatically operated motor vehicle (1) by an assistance system (2) of the motor vehicle (1), comprising:
- capturing surroundings (8) of the motor vehicle (1) by at least one first capturing device (5) of the assistance system (2);
- determining a current gaze (9) of a driver of the motor vehicle (1) by a second capturing device (6) of the assistance system (2);
- assigning the determined current gaze (9) to a current object (10) in the captured surroundings (8) by an electronic computing device (7) of the assistance system (2);
- analyzing the object (10) by the electronic computing device (7);
- providing a personalized action plan for an at least in part automated maneuver of the motor vehicle (1) depending on a user profile and the analyzed object (10); and
- generating the at least one control signal (3) for the at least one functional device (4) depending on the analyzed object (10) and the personalized action plan by the electronic computing device (7).

2. The method according to claim 1,
**characterized in that**
additionally depending on a current dynamic parameter of the motor vehicle (1), the at least one control signal (3) is generated.

3. The method according to claim 2,
**characterized in that**
as the current dynamic parameter, a current speed of the motor vehicle (1) and/or a current driving mode of the motor vehicle (1) and/or a current position of the motor vehicle (1) is taken into consideration.

4. The method according to any one of claims 1 to 3,
**characterized in that**
additionally depending on a current weather condition of the surroundings (8), the at least one control signal (3) is generated.

5. The method according to any one of claims 1 to 4,
**characterized in that**
additionally depending on a current traffic condition of the motor vehicle (1), the at least one control signal (3) is generated.

6. The method according to any one of claims 1 to 5,
**characterized in that**
additionally depending on a current state of the driver, the at least one control signal (3) is generated and/or the current state of the driver is determined depending on the user profile of the driver provided by the electronic computing device (7).

7. The method according to claim 6,
**characterized in that**
the driver is identified by the assistance system (2) and the current state is determined depending on the identification.

8. The method according to any one of claims 1 to 7,
**characterized in that**
the control signal (3) is generated for a driving dynamical functional device (4) of the motor vehicle (1).

9. The method according to any one of claims 1 to 8,
**characterized in that**
at least one safety parameter of an assistance function as the functional device (4) is adapted by using at least one control signal (3).

10. The method according to any one of claims 1 to 9,
**characterized in that**
during analyzation of the object (10), at least a type class of the object (10) and/or a distance to the object (10) is determined.

11. The method according to any one of claims 1 to 10,
**characterized in that**
a period of time the driver is gazing to the object (10) and/or a frequency of the gaze (9) to the object (10) is taken into consideration for generating the control signal (3).

12. The method according to any one of claims 1 to 11,
**characterized in that**
starting the method is triggered by receiving a start signal from the driver.

13. A computer program product comprising program code means for performing a method according to any one of claims 1 to 12.

14. A computer-readable storage medium comprising at least the computer program product according to claim 13.

15. An assistance system (2) for generating at least one control signal (3) for at least one functional device (4) of an at least in part automatically operated motor vehicle (1), comprising at least one first capturing device (5), one second capturing device (6) and one electronic computing device (7), wherein the assistance system (2) is configured for performing a method according to any one of claims 1 to 12.
